# EUROPEAN PATENT APPLICATION

(11) **EP 4 787 264 A1**
(43) Date of publication of application: **05.08.2026**
(21) Application number: 25305145.2
(22) Date of filing: 31.01.2025
(51) Int. Cl.: G06Q 20/06, G06Q 20/36, G06Q 20/38, G06Q 20/40

(54) **METHOD FOR DETECTING THE SOURCE OF A DIGITAL CURRENCY FRAUD**

(71) Applicant: THALES DIS FRANCE SAS, 92190 Meudon (FR)
(72) Inventor: MARTIN, Alain, 78860 Saint-Nom-la-Bretèche (FR); FAVREAU, Valentin, 92130 Issy-les-Moulineaux (FR)
(74) Representative: Grevin, Emmanuel

(57) **Abstract**

The invention is a method for detecting the source of a digital currency fraud, in which a server retrieves both a first currency token (T1) and an associated first signature (SG1) from a first element (SE1) and both a second currency token (T2) and n associated second signature (SG2) from a second element (SE2), both said first and second currency tokens containing a funding currency token (T3) originated from a third element (SE3),
the server detects the existence of the digital currency fraud by identifying an anomaly between said first and second tokens, then determines, as a result of a verification of said first and second signatures, if the first token is a fake token created by the first element, if the second token is a fake token created by said second element or if the third element has unduly spent the funding currency token twice.

## Description

### (Field of the invention)

The present invention relates to methods for detecting the source of a digital currency fraud. It relates particularly to methods for detecting which entity is the source of a fraud related to digital currency financial transaction.

### (Background of the invention)

Deployment of payment solutions based on digital currency has been booming for several years. In the context of an increasing interest of central banks towards Central Bank Digital Currencies (CBDC), some propositions for Digital Currency (DC) rely on hardware secure devices that could be usable without network connectivity, while other propositions rely on secure devices requiring online-only schemes.

### (Summary of the Invention)

Already proposed Digital Currency or CBDC solutions are mainly based on proprietary (i.e. non-standard) methods to carry out payment transactions. Such proposed digital currency solutions may require new hardware and infrastructure to be deployed.

The present document focuses on propositions for digital currency systems relying on hardware secure devices that are usable without network connectivity (i.e. in offline mode). Although hardware secure devices are supposed to implement a large panel of security measures, the possibility of defrauded secure devices remains possible in the field.

A monitoring server (also called central transaction collector) may be in charge of collecting history of offline transactions carried out by secure devices. Although secure devices can handle offline transactions, they are supposed to periodically connect to the monitoring server and upload their transaction logs, for example when they have reached a ceiling on their capacity.

There is need for the monitoring server to detect the source of a fraud when a combination of retrieved transaction logs shows an anomaly.

The invention aims at solving the above-mentioned technical problem.

An object of the present invention is a computed-implemented method for detecting a source of a digital currency fraud. The method comprises the following steps:
- retrieving, by a server both a first digital currency token and a first signature of the first digital currency token from a first secure element
- retrieving, by the server both a second digital currency token and a second signature of the second digital currency token from a second secure element, both said first and second digital currency tokens containing a funding digital currency token originated from a third secure element, both said first and second digital currency tokens and said first and second signatures being supposed to have been generated by the third secure element,
- detecting, by the server, the existence of the digital currency fraud by identifying an anomaly between said first and second tokens, and
- determining as a result of a verification of said first and second signatures performed by the server, if the first token is a fake token created by said first secure element, if the second token is a fake token created by said second secure element or if the third secure element has unduly spent the funding digital currency token twice.

Advantageously, the server may identify the anomaly by noting that both said first and second digital currency tokens contain the funding digital currency token.

Advantageously, the server may determine that the source of a digital currency fraud is:
the first secure element which created said first token, if the verification of said first signature fails, or
the second secure element which created said second token, if the verification of said second signature fails, or
the third secure element which has unduly spent the funding digital currency token twice, if the verification of both said first and second signatures is successful.

Advantageously, during a previous stage:
a key pair comprising a public key and a private key may be uniquely assigned to the third secure element,
the server may be provided with a certificate uniquely assigned to the third secure element, said certificate guaranteeing that said public key is authentic, and
the server may use said public key to perform the verification of said first and second signatures by checking that said first and second signatures have been generated using the private key.

Advantageously, an identifier may be uniquely assigned to the third secure element and a certificate authority may generate said certificate by including said identifier in the certificate.

Advantageously, the server may record in a repository an indication of which of said secure elements is fraudulent.

Another object of the present invention is a system for detecting a source of a digital currency fraud. The system comprises first, second and third secure elements and a server. The server is configured to:
- retrieve both a first digital currency token and a first signature of the first digital currency token from the first secure element and both a second digital currency token and a second signature of the second digital currency token from the second secure element, both said first and second digital currency tokens containing a funding digital currency token originated from the third secure element, both said first and second digital currency tokens and said first and second signatures being supposed to have been generated by the third secure element;
- detect an existence of the digital currency fraud by identifying an anomaly between said first and second tokens, and
- determine as a result of a verification of said first and second signatures, if the first token is a fake token created by said first secure element, if the second token is a fake token created by said second secure element or if the third secure element has unduly spent the funding digital currency token twice.

Advantageously, the server may be configured to identify the anomaly by noting that both said first and second digital currency tokens contain the funding digital currency token.

Advantageously, the server may be configured to determine that the source of a digital currency fraud is:
the first secure element which created said first token, if the verification of said first signature fails, or
the second secure element which created said second token, if the verification of said second signature fails, or
the third secure element which has unduly spent the funding digital currency token twice, if the verification of both said first and second signatures is successful.

Advantageously, during a previous stage:
- a key pair comprising a public key and a private key may be uniquely assigned to the third secure element,
- the server may be provided with a certificate uniquely assigned to the third secure element, said certificate guaranteeing that said public key is authentic, and
the server may be configured to use said public key to perform the verification of said first and second signatures by checking that said first and second signatures have been generated using the private key.

Advantageously, an identifier may be uniquely assigned to the third secure element and a certificate authority may be configured to generate said certificate by including said identifier in the certificate.

Advantageously, the server may be configured to record in a repository an indication of which of said secure elements is fraudulent.

Advantageously, at least one of said first, second and third secure elements may be a smart card, a mobile phone, or a wearable device.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows the general principle based on tokens for transferring digital currency offline between two secure hardware devices,
Fig. 2 shows details of an exemplary flow diagram for transferring digital currency offline between two secure hardware devices,
Fig. 3 shows an example of online connection with retrieval of payment history,
Fig. 4A shows an exemplary flow diagram where a digital currency fraud occurred (without details about the origin of the fraud),
Fig. 4B shows an exemplary flow diagram where a specific digital currency fraud occurred: creation of a fake funding token by a payee hardware device,
Fig. 4C shows an exemplary flow diagram where a specific digital currency fraud occurred: double spend of a token,
Fig. 5 shows a diagram of architecture of a system for managing provisioning of certificates attached to hardware secure devices, and
Fig. 6 shows a diagram of architecture of a system for detecting the source of a digital currency fraud according to an example of the invention.

### (Detailed description of the preferred embodiments)

In the present document, the hardware secure devices (also called secure elements) are designed and configured to performed offline digital currency transactions based on tokens.

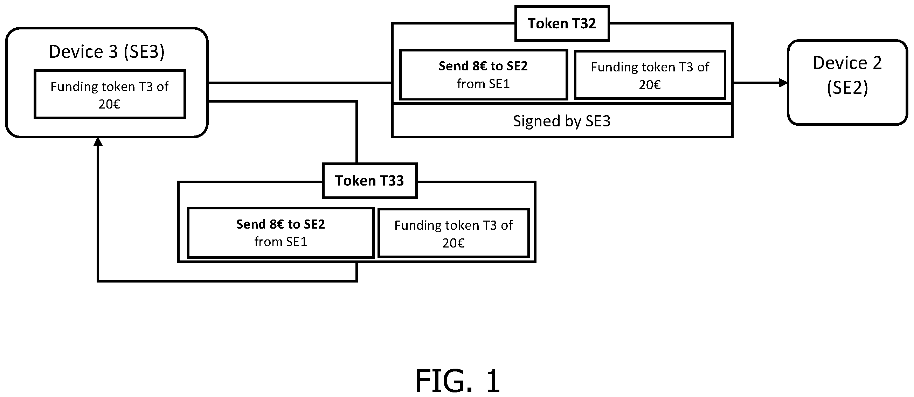

Fig. 1 shows the general principle relying on tokens for transferring a digital currency amount between two secure hardware devices.

During an issuance phase, both secure elements SE3 and SE2 have been provisioned with their own certificate issued by a certificate authority.

During a loading phase, the secure element SE3 receives and stores in its own non-volatile memory a funding token T3. This funding token T3 can be an initial token corresponding to the loading of digital currency in SE3 or a token created from a previous offline transaction sent to SE3.

In the example of Figure 1, the secure element SE3 stores a token T3 worth 20€ which may be the result of loading 20€ or receiving 20€ from a previous offline payment. It is called a funding token because it will be used for the offline payment that will now take place. Then the secure element SE3 (i.e. the payer device) transfers eight Euros (8€) to the secure element SE2 (i.e. the payee device).

To transfer the digital currency amount, SE3 creates a pair of tokens (namely token T32 and token T33) based on the funding token T3. SE3 stores the token T33 in its own memory.

The token T33 comprises both the funding token T3 and data reflecting the amount (8€) debited from the funding token T3. By reading the newly created/stored token T33, the digital currency balance (i.e. the unspent or remaining amount) of SE3 can be built to 12€ (i.e. 20€ of funding token T3 - 8€ transferred to SE2).

The token T32 comprises both the funding token T3 and a data reflecting the amount (8€) credited from the funding token T3. In addition, SE3 generates a signature of the token T32 using its own private key. Then SE3 sends both the token T32 and the signature of the token T32 to SE2 which in turn verifies the signature and, upon positive verification, stores both token T32 and signature in its own non-volatile memory.

Thus, each secure element may store one or more digital currency tokens generated by other entities. Each of these tokens can become the funding token for a subsequent offline payment and thus a chain / history can be built.

It should be noted that a funding token in the payer device can only be used once. It is replaced by the new token (token T33 in the example above) that is stored in the device. This mechanism aims at preventing double spending of digital cash and the fraudulent creation of money. Additionally, it could be noted that token T33 comprises the funding token T3 in its history chain of tokens.

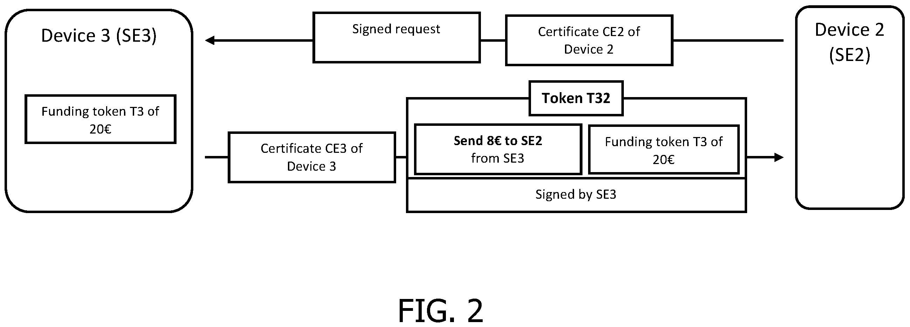

Fig. 2 shows details of an exemplary flow diagram for transferring digital currency between two secure hardware devices, in particular the exchange of certificate of each secure device.

Certificates are exchanged to enable signature verification by each secure element involved in the digital currency transaction. Preferably, the certificate of a device can comprise the public key assigned to the device while the corresponding private key remains stored in the device only.

Taking the example of Fig. 2, the secure element SE2 sends both its own certificate CE2 to secure element SE3 and a request (of payment) signed with a key of SE2. Reciprocally, SE3 sends its own certificate CE3 to SE2.

By extracting the proper key from the received certificate CE3 of SE3, the device SE2 can verify the validity of the signature of the received token T32.

A certificate should include the identifier of the secure element to which it is assigned. The identifier can be authenticated by checking its signature using a key encapsulated in the certificate.

Thanks to the certificates and subsequent signature verification, devices SE2 and SE3 can perform a mutual authentication. Thus, device SE3 knows it is paying device SE2 and device SE2 knows it receiving a digital money transfer from device SE3.

In a system where consecutive offline payments are managed, the only means of securing the payments are those supported by the hardware secure devices. The private key used to sign these payments, the payment mechanism that prevents double spending, the risk management parameters that control offline payments must all be very well protected. Typically, the devices will rely on hardware-based security such as offered by secure elements.

However, despite these hardware-based security measures being put in place, the compromise of a secure element cannot be ruled out. If this happens, a fraudster could retrieve, from the compromised device, the private key that is used to sign the tokens as described above. This would enable the fraudster to create multiple times fake tokens that look genuine to all payee devices.

Any time a secure element connects online, its aggregated payment history (i.e. transaction logs) is uploaded to the monitoring server and stored in a database where it can be analyzed.

The connection between a secure element and the monitoring server can be established through an intermediate reader device coupled to the secure element or directly between the secure element and the server. A combination of conventional communication networks like the Internet, a private network and a Telecom network may be used.

Based on the retrieved transaction logs, the monitoring server can detect existence of a digital currency fraud by performing correlation checks across the offline transactions.

It is important to mention that a device identifier cannot be forged, because it is included in the certificate that signs the device public key. In other words, the authenticity of a device identifier is guaranteed by the certificate authority (CA) which signed the certificate bound to the device identifier. When a device is compromised, its private key may be retrieved but the device identifier cannot be modified.

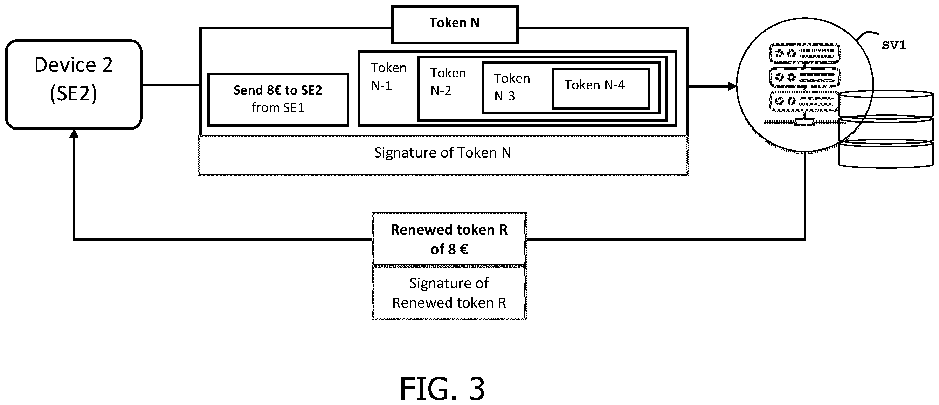

Fig. 3 depicts an example of online connection with retrieval of payment history.

As per a proper rule stored in a batch of secure elements, the secure element SE2 may be required to establish an online connection with a monitoring server SV1. Such online connection may be needed when the secure element performed a predefined number of digital currency transactions or when the last stored token has an amount higher to a preset threshold for instance.

In the example of Fig. 3, the secure element SE2 stores a token N in its own non-volatile memory. The token N means SE2 received 8 Euros from the secure element SE1. The token N contains its own token chain showing that it was generated from the token N-1, that the token N-1 was generated from the token N-2, that the token N-2 was generated from the token N-3 and that the token N-3 was generated from the token N-4.

It should be noted that due to the limited memory size of the secure elements, only the signature of the token N (i.e. the last received/generated token) is stored in the secure element. In other words, the signatures of the previous tokens belonging to the chain leading to the token N are no longer stored in the secure element.

The server SV1 may retrieve both the token N and the signature of the token N from the secure element. Then the server may generate a renewed token R (and the signature of the token R) corresponding to the digital currency balance of 8 Euros. Upon receipt of the renewed token R (and its signature), the secure element SE2 can replace the token N with the newly received token R, thus reducing the size of the token representing 8€. The server SV1 may store the token N (and the signature of the token N) in an internal or external repository and perform an analysis to detect a possible fraud and the source of the fraud based on the content of the token N. Preferably, the server may store the token N coupled with an identifier of the secure element SE2.

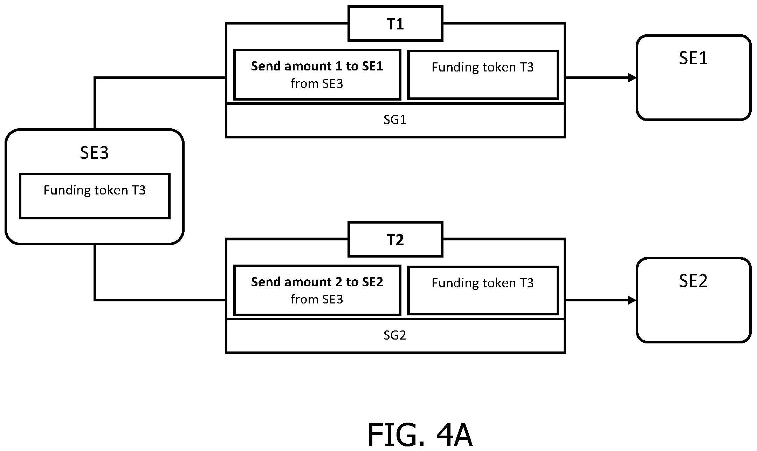

Fig. 4A depicts an exemplary case where a digital currency fraud occurred, without details about the origin of the fraud.

When a digital currency device is hacked, its genuine private key may be retrieved by a malevolent person. Then the hacker can use the private key of the compromised device to create fake digital currency tokens that look genuine to the payee because the signature of such a fake token appears to be valid to the payee.

The device SE3 may have been compromised and its private key retrieved by a fraudster. Subsequently, the fraudster may have created two tokens T1 & T2 using the same funding token T3.

It is unlikely that the fraudster will cause its fraudulent device SE3 to connect online. Assuming that devices SE2 and SE1 are genuine secure elements, they will eventually connect online and upload their token history to the monitoring server. The monitoring server can analyze these histories which will reveal that the funding token T3 has been spent twice by the same device, which is forbidden. Moreover, the monitoring server may conclude that tokens T1 and T2 originate from SE3 which is the faulty secure element.

In the double spend example of Fig. 4A, it seemed obvious that the device SE3 created the fraudulent tokens T1 and T2. However, it may happen that the faulty device could actually be one of the two other secure elements.

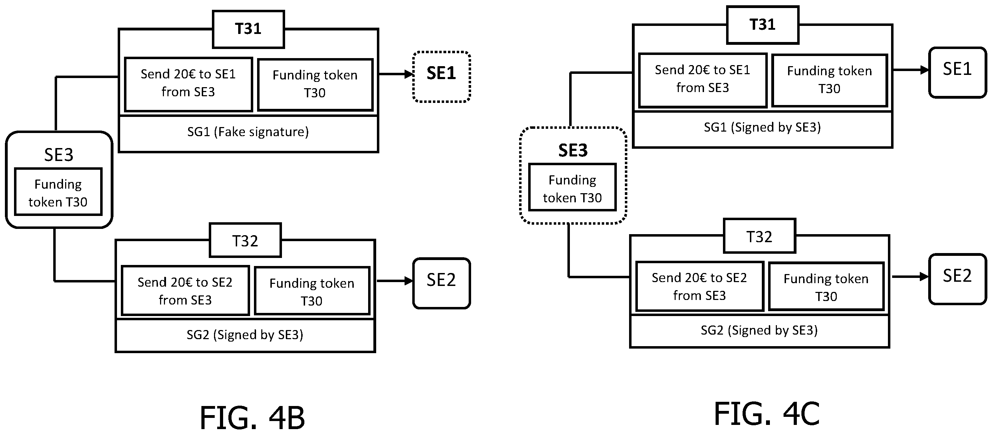

Fig. 4B depicts an exemplary flow diagram where a specific digital currency fraud occurred: creation of a fake funding token by a payee hardware device.

In this example, the faulty device SE1 (shown in dotted line) created a fraudulent token T31 containing the funding token T30 supposed to be the one coming from the device SE3. The device SE1 does not know the private key of the device SE3 and generated a fake signature SG1 of the token T31. In parallel, the device SE3 created a genuine token T32 based on the funding token T30 and generated a genuine signature SG2 of the token T32. Then both the token T32 and the signature SG2 were sent to the device SE2.

Fig. 4C depicts an exemplary flow diagram where a specific digital currency fraud occurred: double spend of a token.

In this example, the faulty device SE3 (shown in dotted line) created a genuine token T32 and a fraudulent token T31 based on a same funding token T30. Signatures SG1 and SG2 of tokens T31, respectively T32, are valid since generated by the device SE3 using its own private key.

With reference to Fig. 4A, it could be that SE1 is the compromised device and created for itself a fake funding token T1 which it uses as the source of funds (i.e. funding token) for a next offline payment. In such a case, the signature SG1 of this token T1 will also be fake since the signature would have been created by the device SE1 instead of the device SE3 (knowing that SE1 knows its own private key but does not know the private key of SE3). At the same time, a similar fraud hypothesis can be considered for the other secure element, namely device SE2.

It should be noted that such a fraud is possible because the payee device does not transmit the signature of the funding token to other devices in subsequent offline payments.

The monitoring server is provisioned with the identifier and certificate of each secure element of a batch it is in charge of. The provisioning may occur during device enrolment, at the time the device key pair is generated, the device identifier is assigned and the certificate created. Thus, the server has the ability to verify the signatures received during an online connection and therefore to differentiate a double spend from a fake funding token.

In some embodiments, the monitoring server (also called the server) retrieves from the first secure element SE1 both the first digital currency token T1 and the first signature SG1 of the first digital currency token T1. The monitoring server retrieves from the second secure element SE2 both the second digital currency token T2 and the second signature SG2 of the second digital currency token T2. The retrieving of the tokens and signatures can be done when each of these secure elements establish an online connection with the server.

By analyzing the retrieved history logs, the server can detect that said first and second digital currency tokens T1 & T2 contain the same funding digital currency token T3 which is supposed to originate from a third secure element SE3. Both said first and second digital currency tokens T1 & T2 and said first and second signatures SG1 & SG2 are supposed to have been generated by the third secure element SE3.

The server detects the existence of a digital currency fraud by identifying an anomaly between the first and second tokens.

The server performs a verification of the first and second signatures, then determines, as a result of this verification, if the first token is a fake token created by the first secure element SE1, if the second token is a fake token created by the second secure element SE2 or if the third secure element SE3 has unduly spent the funding digital currency token T3 twice.

More precisely, the server may verify the validity of the both the first and second signatures, SG1, SG2 and may determine that the source of a digital currency fraud is:
the first secure element SE1 which created the first token, if the verification of the first signature SG1 fails, or
the second secure element SE2 which created the second token, if the verification of the second signature SG2 fails, or
the third secure element SE3 which has unduly spent the funding digital currency token T3 twice, if the verification of both said first and second signatures is successful.

Signature verification by the server is used to distinguish a forbidden double spend (made using a fake funding token) from the creation of a fraudulent token used as a funding token for a subsequent offline payment.

Thus, by performing one operation of verification of a pair of signatures, the server can determine which hardware device (among three) is the source of the digital currency fraud.

In some embodiments, the server can identify the presence of an anomaly by noting that both the first and second digital currency tokens contain the same funding digital currency token.

In some embodiments, the server uses the certificates of the secure elements that have been prestored in a repository reachable by the server. The server can use the public key comprised in a certificate to perform the verification of the two signatures SG1 and SG2. Let's assume that, during a previous stage, a key pair comprising a public key and a private key has been uniquely assigned to the third secure element SE3 and the server has been provided with the certificate CE3 uniquely assigned to the third secure element SE3. The certificate comprises the public key assigned to SE3. This certificate is signed by a certificate authority that guarantees that the public key is authentic. The server can perform the verification of both the first and second signatures by checking that said first and second signatures have been generated using the private key corresponding to the public key extracted from the certificate of SE3.

In some embodiments, an identifier ID3 is uniquely assigned to the third secure element SE3 and the certificate authority has generated the certificate by including the identifier ID3 of SE3 in the certificate.

Since the device identifier of the secure element and the public key of secure element are bound in a certificate, the server can select the proper public key when a signature verification is needed.

In some embodiments, the server can record in a repository an indication of which secure element is fraudulent. Additionally, the server may trigger specific actions to try to prevent future use of the fraudulent secure element.

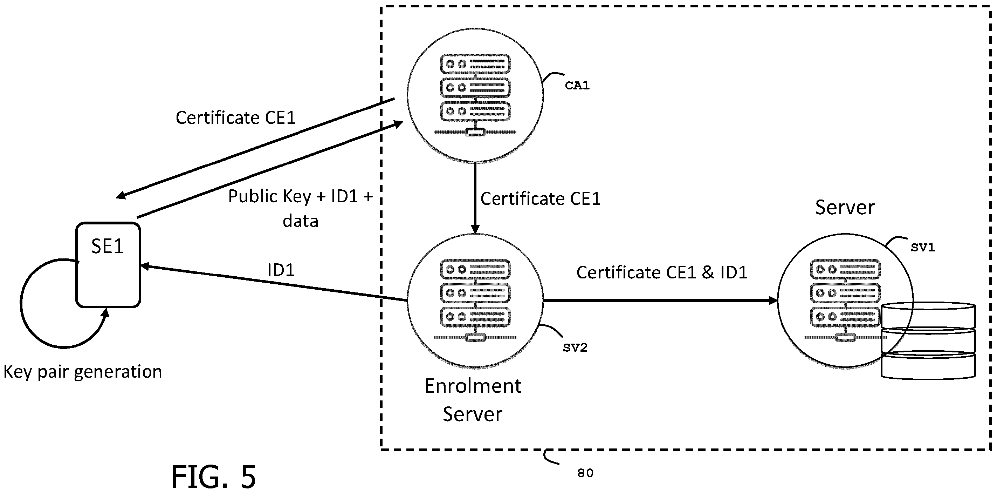

Fig. 5 depicts a diagram of architecture of a system 80 for managing provisioning of certificates assigned to hardware secure elements.

The assignment of identifiers and certificates may be managed in any suitable manner. For example, an enrolment server SV2 may assign an identifier ID1 to the secure element SE1. The secure element SE1 may generate and store its own key pair comprising both a public key and a private key, then send the public key and its identifier ID1 along other possible data to a certificate authority CA1. In turn, the certificate authority can generate a certificate CE1 binding the received public key and the received identifier ID1. Then, the certificate authority can send the certificate CE1 to both the secure element SE1 and the enrolment server SV2. Finally, the enrolment server SV2 may provision the monitoring server SV1 with the identifier ID1 and certificate CE1.

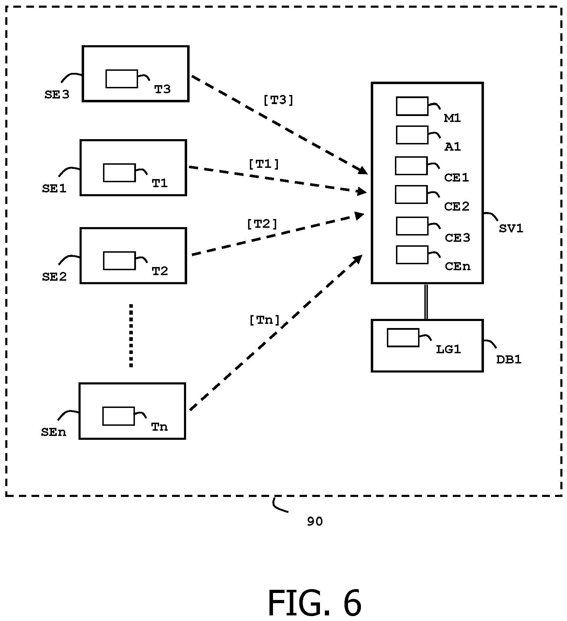

Fig. 6 depicts a diagram of architecture of a system 90 for detecting the source of a digital currency fraud according to an example of the invention.

The system 90 aims at detecting the source of a digital currency fraud. The system 90 comprises at least first, second and third secure elements (SE1, SE2, SE3) and a server SV1 (also named monitoring server). The system 90 may comprise many secure elements as depicted by SEn.

Each of said secure elements are hardware devices configured to store and manage digital currency token allowing to transfer money between secure elements in offline mode.

Each of said secure elements comprises at least one digital currency token. In the example of Fig. 6, the secure element SE1 comprises a token T1 for instance.

When one secure element of the system goes online, the server SV1 is configured to retrieve both the digital currency token and the signature of the retrieved digital currency token which are stored in the connected secure element.

A secure element can be implemented in many kinds of portable hardware device. The invention is well suited for secure elements which are smart cards. It can also apply to secure elements having different form factors such as smartphones and wearable devices like, rings, key fobs or bracelets for example.

Smart cards are portable small devices comprising a memory, a processor, and an operating system for computing treatments. They may comprise services applications like Payment, Access, or Telecom applications. Smart cards may comprise a plurality of memories of different types, like non-volatile memory and volatile memory. They are considered as tamper-resistant (or "secure") because they are designed to control the access to the data they contain and to authorize or not the use of data by other machines. A smartcard may also provide computation services based on cryptographic components. In general, smartcards have limited computing resources and limited memory resources and they are intended to connect a host machine that provides them with electric power either in contact mode or in contactless mode. Some smart cards have their own embedded energy source.

Contact smart cards are usually designed to communicate according to at least one contact protocol like ISO/IEC7816 T=0 or T=1 communication protocols. Contactless smart cards are designed to communicate according to at least one contactless protocol like a protocol defined by ISO/IEC 14443 standard.

The server SV1 can be a hardware server including one or more hardware processors and program instructions which, when executed by the hardware processor(s), are configured to provide the functions of the server SV1.

The server SV1 has been provisioned with certificates CE1 to CEn individually assigned to the secure elements SE1 to SEn.

The server SV1 can comprise a monitoring engine M1 designed to retrieve both the first digital currency token T1 and the first signature of the first digital currency token from SE1 and both the second digital currency token T2 and a second signature of the second digital currency token from the SE2.

The server SV1 can comprise or be coupled to a repository DB1 in which the monitoring engine M1 can store a history log LG1 comprising the data retrieved from the secure elements.

In this example, both said first and second digital currency tokens contain a funding digital currency token which is identical to the digital currency token T3. In other words, tokens T1 and T2 appear to be generated from the same funding token T3 originated from the third secure element SE3. Thus, both said first and second digital currency tokens T1 & T2 and said first and second signatures are supposed to have been generated by the SE3.

The server SV1 can comprise an analyzer A1 configured to detect the existence of the digital currency fraud by identifying an anomaly between said first and second tokens T1 & T2.

The analyzer A1 can determine, as a result of a verification of said first and second signatures, if the first token is a fake token created by the device SE1, if the second token is a fake token created by the device SE2 or if the device SE3 has unduly spent the funding digital currency token T3 twice.

Preferably, the analyzer A1 is configured to determine that the source of a digital currency fraud is:
the first secure element SE1 which created said first token T1, if the verification of the signature of the first token T1 fails, or
the second secure element SE2 which created said second token T2, if the verification of the signature of the second token T2 fails, or
the third secure element SE3 which has unduly spent the funding digital currency token T3 twice, if the verification of both signatures of tokens T1 & T2 is successful. (i.e. if these two signatures are found to be valid)

In some embodiments, during a previous stage a key pair comprising a public key and a private key has been uniquely assigned to the third secure element SE3.

The server SV1 can be provisioned with a certificate CE3 uniquely assigned to the third secure element SE3, said certificate guaranteeing that said public key is authentic. The analyzer A1 can be configured to extract the public key of SE3 from the certificate CE3 and to use this public key to perform the verification of the signatures of the tokens T1 and T2 by checking that said signatures have been generated using the private key of the key pair.

In some embodiments, an identifier ID3 has been uniquely assigned to the third secure element SE3 and a certificate authority is configured to generate the certificate CE3 by including the identifier ID3 in the certificate or securely binding the certificate CE3 to the identifier ID3. Such a secure binding can be done by generating a signature of the identifier ID3 using a key extracted from the certificate CE3 for instance.

The analyzer A1 can be configured to identify the existence of an anomaly (i.e. a digital currency fraud occurred) by analyzing the history log LG1.

In some embodiments, the analyzer A1 can be configured to detect the existence of an anomaly by noting that two digital currency tokens (coming from two distinct secure element) contain the same funding digital currency token.

In some embodiments, the analyzer A1 can be configured to detect the existence of an anomaly by noting that a secure element transferred to one or more other secure elements a money amount higher than the funding digital currency token with which it was initialized.

In some embodiments, the analyzer A1 can be configured to record in the repository DB1 an indication of which secure element is fraudulent.

The system 90 can be designed to manage digital currency provided by a unique financial institution or a group of financial institutions. The system 90 can be designed to manage Central Bank Digital Currencies (CBDC) .

Thanks to some embodiments of the invention, the security of the offline digital currency payment solution does not rely on the absolute certainty that the hardware secure elements cannot be compromised. Assuming that a secure element could be hacked, some embodiments of the invention allow to pinpoint the fraudulent secure element. This advantage appears to be key for digital currency systems which may comprise millions of secure elements deployed in the field.

Once a fraudulent secure element has been identified according to some embodiments of the invention, the server SV1 can apply security rules to limit or prevent usage of the fraudulent secure element. For instance, the fraudulent secure element can be blacklisted or deactivated.

The invention is not limited to the described embodiments or examples. In particular, the described features of the presented embodiments may be combined as can be understood by those skilled in the art.

## Claims

1. A computed-implemented method for detecting a source of a digital currency fraud,
wherein the method comprises the following steps:
retrieving, by a server (SV1), both a first digital currency token (T1) and a first signature (SG1) of the first digital currency token (T1) from a first secure element (SE1) and both a second digital currency token (T2) and a second signature (SG2) of the second digital currency token (T2) from a second secure element (SE2), both said first and second digital currency tokens containing a funding digital currency token (T3) originated from a third secure element (SE3), both said first and second digital currency tokens (T1, T2) and said first and second signatures (SG1, SG2) being supposed to have been generated by the third secure element (SE3),
detecting, by the server, an existence of the digital currency fraud by identifying an anomaly between said first and second tokens (T1, T2),
determining as a result of a verification of said first and second signatures performed by the server, if the first token is a fake token created by said first secure element (SE1), if the second token is a fake token created by said second secure element (SE2) or if the third secure element (SE3) has unduly spent the funding digital currency token (T3) twice.

2. The method according to claim 1, wherein the server identifies the anomaly by noting that both said first and second digital currency tokens (T1, T2) contain the funding digital currency token (T3).

3. The method according to claim 1 or 2, wherein the server determines that the source of a digital currency fraud is:
the first secure element (SE1) which created said first token, if the verification of said first signature (SG1) fails, or
the second secure element (SE2) which created said second token, if the verification of said second signature (SG2) fails, or
the third secure element (SE3) which has unduly spent the funding digital currency token (T3) twice, if the verification of both said first and second signatures (SG1, SG2) is successful.

4. The method according to any preceding claim, wherein, during a previous stage:
a key pair comprising a public key and a private key is uniquely assigned to the third secure element (SE3),
the server is provided with a certificate (CE3) uniquely assigned to the third secure element (SE3), said certificate guaranteeing that said public key is authentic, and
wherein the server uses said public key to perform the verification of said first and second signatures by checking that said first and second signatures have been generated using the private key.

5. The method according to claim 4, wherein an identifier (ID3) is uniquely assigned to the third secure element (SE3) and wherein a certificate authority (CA1) generates said certificate (CE3) by including said identifier (ID3) in the certificate.

6. The method according to any preceding claim, wherein the server records in a repository (DB1) an indication of which of said secure elements is fraudulent.

7. A system (90) for detecting a source of a digital currency fraud, said system comprising first, second and third secure elements (SE1, SE2, SE3) and a server (SV1),
wherein the server is configured to:
retrieve both a first digital currency token (T1) and a first signature (SG1) of the first digital currency token (T1) from the first secure element (SE1) and both a second digital currency token (T2) and a second signature (SG2) of the second digital currency token (T2) from the second secure element (SE2), both said first and second digital currency tokens containing a funding digital currency token (T3) originated from the third secure element (SE3), both said first and second digital currency tokens (T1, T2) and said first and second signatures (SG1, SG2) being supposed to have been generated by the third secure element (SE3),
detect an existence of the digital currency fraud by identifying an anomaly between said first and second tokens (T1, T2),
determine as a result of a verification of said first and second signatures, if the first token is a fake token created by said first secure element (SE1), if the second token is a fake token created by said second secure element (SE2) or if the third secure element (SE3) has unduly spent the funding digital currency token (T3) twice.

8. The system according to claim 7, wherein the server is configured to identify the anomaly by noting that both said first and second digital currency tokens (T1, T2) contain the funding digital currency token (T3).

9. The system according to claim 7 or 8, wherein the server is configured to determine that the source of a digital currency fraud is:
the first secure element (SE1) which created said first token, if the verification of said first signature (SG1) fails, or
the second secure element (SE2) which created said second token, if the verification of said second signature (SG2) fails, or
the third secure element (SE3) which has unduly spent the funding digital currency token (T3) twice, if the verification of both said first and second signatures (SG1, SG2) is successful.

10. The system according to any claim 7 to 9, wherein, during a previous stage:
a key pair comprising a public key and a private key is uniquely assigned to the third secure element (SE3),
the server is provided with a certificate (CE3) uniquely assigned to the third secure element (SE3), said certificate guaranteeing that said public key is authentic, and
wherein the server is configured to use said public key to perform the verification of said first and second signatures by checking that said first and second signatures have been generated using the private key.

11. The system according to claim 10, wherein an identifier (ID3) is uniquely assigned to the third secure element (SE3) and wherein a certificate authority (CA1) is configured to generate said certificate (CE3) by including said identifier (ID3) in the certificate.

12. The system according to any claim 7 to 9, wherein the server is configured to record in a repository (DB1) an indication of which of said secure elements is fraudulent.

13. The system according to any claim 7 to 9, wherein at least one of said first, second and third secure elements is a smart card, a mobile phone, or a wearable device.
